(19) Europäisches Patentamt
European Patent Office
Office européen des brevets

(11) **EP 3 402 285 A2**

(12) **EUROPEAN PATENT APPLICATION**
published in accordance with Art. 153(4) EPC

(43) Date of publication:
**14.11.2018 Bulletin 2018/46**

(51) Int Cl.:
***H04W 72/12*** (2009.01)

(21) Application number: **17736163.1**

(22) Date of filing: **09.01.2017**

(86) International application number:
**PCT/KR2017/000243**

(87) International publication number:
**WO 2017/119791 (13.07.2017 Gazette 2017/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.01.2016 US 201662276243 P**
**04.02.2016 US 201662290982 P**
**01.04.2016 US 201662316635 P**
**19.05.2016 US 201662339041 P**

(71) Applicant: **LG Electronics Inc.**
**Yeongdeungpo-gu**
**Seoul 07336 (KR)**

(72) Inventors:
• **YANG, Suckchel**
**Seoul 06772 (KR)**
• **AHN, Joonkui**
**Seoul 06772 (KR)**
• **PARK, Hanjun**
**Seoul 06772 (KR)**
• **KIM, Seonwook**
**Seoul 06772 (KR)**

(74) Representative: **Frenkel, Matthias Alexander**
**Wuesthoff & Wuesthoff**
**Patentanwälte PartG mbB**
**Schweigerstrasse 2**
**81541 München (DE)**

(54) **METHOD AND APPARATUS FOR TRANSMITTING AND RECEIVING WIRELESS SIGNAL IN WIRELESS COMMUNICATION SYSTEM**

(57) The present invention relates to a wireless communication system and, more particularly, to a method and an apparatus therefor, the method comprising the steps of: receiving a DCI including UL scheduling information for a plurality of subframes, wherein the DCI further includes SRS request information; and transmitting, according to the request indicated by the SRS request information, an SRS through a predetermined subframe among the plurality of subframes only one time, wherein the predetermined subframe includes the first subframe in which UL transmission is scheduled or the last subframe in which UL transmission is scheduled, among the plurality of subframes.

FIG. 15

Receiving DCI including UL scheduling information for a plurality of subframes, wherein the DCI further includes SRS request information — S1502

Transmitting SRS only one time in a pre-determined subframe in the plurality of the subframes according to the SRS request information, wherein the pre-determined subframe includes at least the 1st subframe to which UL transmission is scheduled or the last subframe to which UL transmission is scheduled in the plurality of subframes — S1504

**Description**

[Technical Field]

The present invention relates to a wireless communication system, and more particularly, to a method and apparatus for transmitting/receiving a wireless signal. The wireless communication system includes a CA-based (Carrier Aggregation-based) wireless communication system.

[Background Art]

Wireless communication systems have been widely deployed to provide various types of communication services including voice and data services. In general, a wireless communication system is a multiple access system that supports communication among multiple users by sharing available system resources (e.g. bandwidth, transmit power, etc.) among the multiple users. The multiple access system may adopt a multiple access scheme such as code division multiple access (CDMA), frequency division multiple access (FDMA), time division multiple access (TDMA), orthogonal frequency division multiple access (OFDMA), or single carrier frequency division multiple access (SC-FDMA).

[Disclosure]

[Technical Problem]

It is an object of the present invention to provide a method and apparatus for efficiently performing operations of transmission and reception of a wireless signal.
Technical tasks obtainable from the present invention are non-limited by the above-mentioned technical task. And, other unmentioned technical tasks can be clearly understood from the following description by those having ordinary skill in the technical field to which the present invention pertains.

[Technical Solution]

In one aspect of the present invention, a method of performing communication by a UE in a wireless communication system includes: receiving downlink control information (DCI) including UL scheduling information about a plurality of subframes, the DCI further including sounding reference signal (SRS) request information; and transmitting an SRS through a predetermined subframe among the plurality of subframe only one time according to indication of the SRS request information, wherein the predetermined subframe includes the first subframe or the last subframe in which UL transmission is scheduled among the plurality of subframes.
In another aspect of the present invention, a UE used in a wireless communication system includes a radio frequency (RF) module and a processor, wherein the processor is configured to receive downlink control information (DCI) including UL scheduling information about a plurality of subframes, the DCI further including sounding reference signal (SRS) request information and to transmit an SRS through a predetermined subframe among the plurality of subframe only one time according to indication of the SRS request information, wherein the predetermined subframe includes the first subframe or the last subframe in which UL transmission is scheduled among the plurality of subframes.
Preferably, multiple UL transmissions may be further performed in the plurality of subframes on the basis of the UL scheduling information.
Preferably, the UL transmissions may include a physical uplink shared channel (PUSCH).
Preferably, the DCI may include UL scheduling information about a plurality of subframes on an unlicensed cell (UCell) operating in a unlicensed band, and the SRS may be transmitted on the UCell.
Preferably, the DCI may be received on the UCell or a licensed cell (LCell) operating in a licensed band.
Preferably, the DCI may further include information indicating the number of subframes in which UL transmission is scheduled among the plurality of subframes.
Preferably, the wireless communication system may include a wireless communication system based on Long Term Evolution (LTE) License Assisted Access (LAA).
In another aspect of the present invention, a method of performing communication by a UE in a wireless communication system includes: receiving DCI including UL scheduling information about a plurality of subframes, the DCI further including information indicating the number Nsf of subframes in which UL transmission is scheduled; and performing Nsf UL transmissions in the plurality of subframes on the basis of the UL scheduling information, wherein the size of the DCI is defined to correspond to a maximum number Nsf_max of subframes in which UL transmission can be scheduled, and Nsf is less than Nsf_max.
In another aspect of the present invention, a UE in a wireless communication system includes an RF module and a processor, wherein the processor configured to receive DCI including UL scheduling information about a plurality of subframes, the DCI indicating the number Nsf of subframes in which UL transmission is scheduled and to perform Nsf UL transmissions in the plurality of subframes on the basis of the UL scheduling information, wherein the size of the DCI is defined to correspond to a maximum number Nsf_max of subframes in which UL transmission can be scheduled, and Nsf is less than Nsf_max.

Preferably, the size of the DCI may be defined on the basis of Nsf_max new data indicator (NDI) bits, and only Nsf NDI bits corresponding to subframes in which UL transmission is scheduled may be used in the DCI.

Preferably, the DCI may include first information commonly applied to Nsf subframes, second information applied only to one of the Nsf subframes, and third information individually applied to each subframe belonging to the Nsf subframes.

The first information may include Resource Allocation (RA) information, Modulation and Coding Scheme (MCS) information, Demodulation Reference Signal Cyclic Shift (DMRS CS) information and Transmit Power Control (TPC) information.

The second information may include Channel State Information (CSI) request information and Sounding Reference Signal (SRS) information.

The third information may include New Data Indicator (NDI) information, Redundancy Version (RV) information and Hybrid ARQ (HARQ) process number information.

[Advantageous Effects]

According to embodiments of the present invention, wireless signal transmission and reception can be efficiently performed in a wireless communication system.

Effects obtainable from the present invention are non-limited by the above mentioned effect. And, other unmentioned effects can be clearly understood from the following description by those having ordinary skill in the technical field to which the present invention pertains.

[Description of Drawings]

The accompanying drawings, which are included to provide a further understanding of the invention and are incorporated in and constitute a part of this specification, illustrate embodiments of the invention and together with the description serve to explain the principles of the invention.

FIG. 1 illustrates physical channels used in 3GPP LTE(-A) and a signal transmission method using the same.
FIG. 2 illustrates a radio frame structure.
FIG. 3 illustrates a resource grid of a downlink slot.
FIG. 4 illustrates a downlink subframe structure.
FIG. 5 illustrates an example of Enhanced Physical Downlink Control Channel (EPDCCH).
FIG. 6 illustrates the structure of an uplink subframe used in LTE(-A).
FIG. 7 illustrates uplink-downlink frame timing relation.
FIG. 8 illustrates UL HARQ (Uplink Hybrid Automatic Repeat reQuest) operation.
FIG. 9 illustrates a carrier aggregation (CA)-based wireless communication system.
FIG. 10 illustrates cross-carrier scheduling.
FIG. 11 illustrates carrier aggregation of a licensed band and an unlicensed band.
FIGs. 12 and 13 illustrate a method of occupying resources within a licensed band.
FIG. 14 illustrates a UL transmission process according to the present invention.
FIG. 15 illustrates an SRS transmission process according to the present invention.
FIG. 16 illustrates a base station and a user equipment applicable to an embodiment of the present invention.

[Best Mode]

Embodiments of the present invention are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is a part of Evolved UMTS (E-UMTS) using E-UTRA, employing OFDMA for downlink and SC-FDMA for uplink. LTE-Advanced (LTE-A) evolves from 3GPP LTE.

While the following description is given, centering on 3GPP LTE/LTE-A for clarity, this is purely exemplary and thus should not be construed as limiting the present invention. It should be noted that specific terms disclosed in the present invention are proposed for convenience of description and better understanding of the present invention, and the use of these specific terms may be changed to other formats within the technical scope or spirit of the present invention.

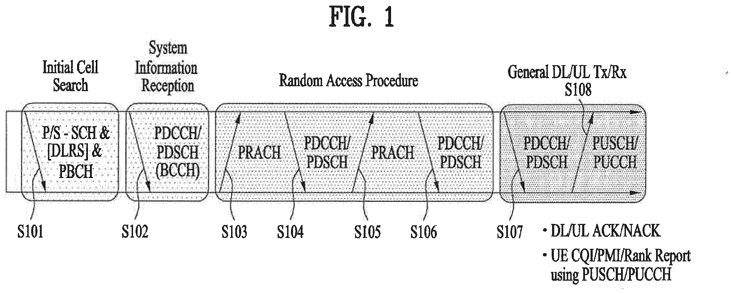

FIG. 1 illustrates physical channels used in 3GPP LTE(-A) and a signal transmission method using the same.

When powered on or when a UE initially enters a cell, the UE performs initial cell search involving synchronization with a BS in step S101. For initial cell search, the UE synchronizes with the BS and acquire information such as a cell Identifier (ID) by receiving a primary synchronization channel (P-SCH) and a secondary synchronization channel (S-SCH) from the BS. Then the UE may receive broadcast information from the cell on a physical broadcast channel (PBCH). In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

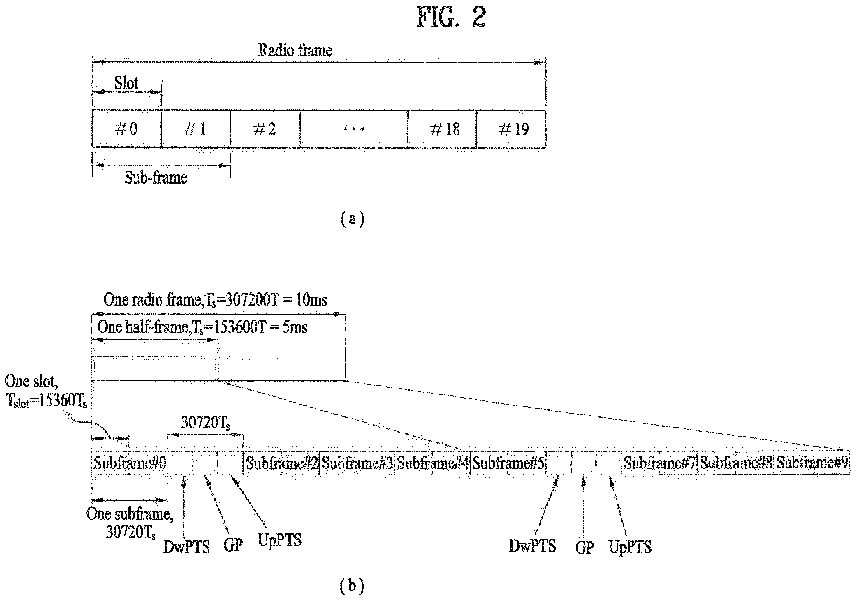

FIG. 2 illustrates a radio frame structure. Uplink/downlink data packet transmission is performed on a subframe-by-subframe basis. A subframe is defined as a predetermined time interval including a plurality of symbols. 3GPP LTE supports a type-1 radio frame structure applicable to frequency division duplex (FDD) and a type-2 radio frame structure applicable to time division duplex (TDD).

FIG. 2(a) illustrates a type-1 radio frame structure. A downlink subframe includes 10 subframes each of which includes 2 slots in the time domain. A time for transmitting a subframe is defined as a transmission time interval (TTI). For example, each subframe has a duration of 1ms and each slot has a duration of 0.5ms. A slot includes a plurality of OFDM symbols in the time domain and includes a plurality of resource blocks (RBs) in the frequency domain. Since downlink uses OFDM in 3GPP LTE, an OFDM symbol represents a symbol period. The OFDM symbol may be called an SC-FDMA symbol or symbol period. An RB as a resource allocation unit may include a plurality of consecutive subcarriers in one slot.

The number of OFDM symbols included in one slot may depend on cyclic prefix (CP) configuration. CPs include an extended CP and a normal CP. When an OFDM symbol is configured with the normal CP, for example, the number of OFDM symbols included in one slot may be 7. When an OFDM symbol is configured with the extended CP, the length of one OFDM symbol increases, and thus the number of OFDM symbols included in one slot is smaller than that in case of the normal CP. In case of the extended CP, the number of OFDM symbols allocated to one slot may be 6. When a channel state is unstable, such as a case in which a UE moves at a high speed, the extended CP can be used to reduce inter-symbol interference.

When the normal CP is used, one subframe includes 14 OFDM symbols since one slot has 7 OFDM symbols. The first three OFDM symbols at most in each subframe can be allocated to a PDCCH and the remaining OFDM symbols can be allocated to a PDSCH.

FIG. 2(b) illustrates a type-2 radio frame structure. The type-2 radio frame includes 2 half frames. Each half frame includes 4(5) normal subframes and 10 special sub frames. The normal subframes are used for uplink or downlink according to UL-DL configuration. A subframe is composed of 2 slots.

Table 1 shows subframe configurations in a radio frame according to UL-DL configurations.

[Table 1]

| Uplink-downlink configuration | Downlink-to-Uplink Switch point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5ms | D | S | U | U | U | D | S | U | U | U |
| 1 | 5ms | D | S | U | U | D | D | S | U | U | D |
| 2 | 5ms | D | S | U | D | D | D | S | U | D | D |
| 3 | 10ms | D | S | U | U | U | D | D | D | D | D |
| 4 | 10ms | D | S | U | U | D | D | D | D | D | D |
| 5 | 10ms | D | S | U | D | D | D | D | D | D | D |
| 6 | 5ms | D | S | U | U | U | D | S | U | U | D |

In Table 1, D denotes a downlink subframe, U denotes an uplink subframe and S denotes a special subframe. The special subframe includes DwPTS (Downlink Pilot TimeSlot), GP (Guard Period), and UpPTS (Uplink Pilot TimeSlot). DwPTS is used for initial cell search, synchronization or channel estimation in a UE and UpPTS is used for channel estimation in a BS and uplink transmission synchronization in a UE. The GP eliminates UL interference caused by multi-path delay of a DL signal between a UL and a DL.

The radio frame structure is merely exemplary and the number of subframes included in the radio frame, the number of slots included in a subframe, and the number of symbols included in a slot can be vary.

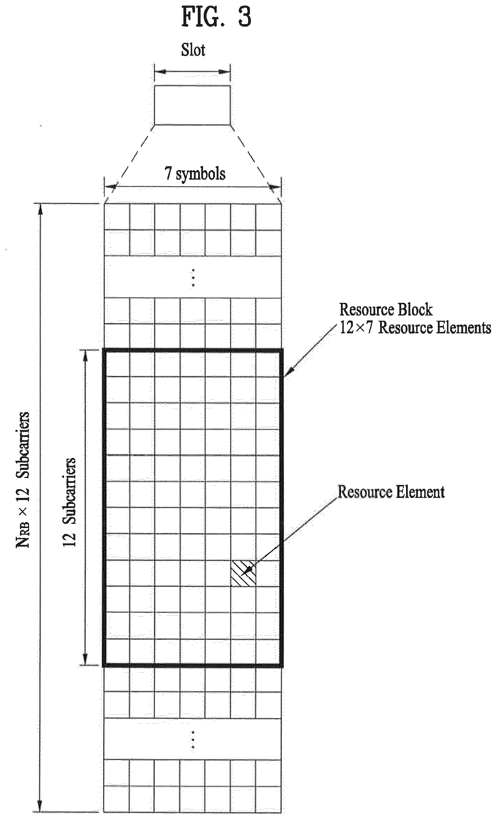

FIG. 3 illustrates a resource grid of a downlink slot.

Referring to FIG. 3, a downlink slot includes a plurality of OFDM symbols in the time domain. While one downlink slot may include 7 OFDM symbols and one resource block (RB) may include 12 subcarriers in the frequency domain in the figure, the present invention is not limited thereto. Each element on the resource grid is referred to as a resource element (RE). One RB includes 12×7 REs. The number NRB of RBs included in the downlink slot depends on a downlink transmit bandwidth. The structure of an uplink slot may be same as that of the downlink slot.

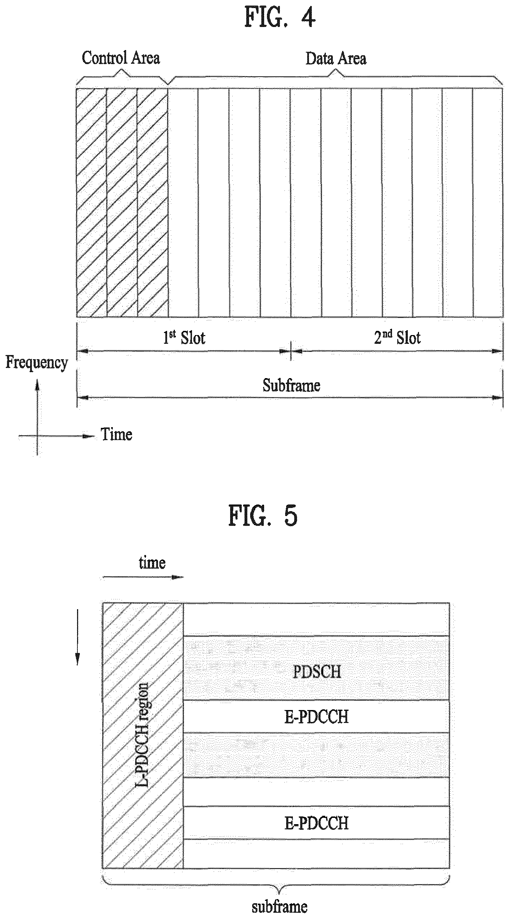

FIG. 4 illustrates a downlink subframe structure.

Referring to FIG. 4, a maximum of three (four) OFDM symbols located in a front portion of a first slot within a subframe correspond to a control region to which a control channel is allocated. The remaining OFDM symbols correspond to a data region to which a physical downlink shared chancel (PDSCH) is allocated. A basic resource unit of the data region is an RB. Examples of downlink control channels used in LTE include a physical control format indicator channel (PCFICH), a physical downlink control channel (PDCCH), a physical hybrid ARQ indicator channel (PHICH), etc. The PCFICH is transmitted at a first OFDM symbol of a subframe and carries information regarding the number of OFDM symbols used for transmission of control channels within the subframe. The PHICH is a response of uplink transmission and carries an HARQ acknowledgment (ACK)/negative-acknowledgment (NACK) signal. Control information transmitted through the PDCCH is referred to as downlink control information (DCI). The DCI includes uplink or downlink scheduling information or an uplink transmit power control command for an arbitrary UE group.

Control information transmitted through the PDCCH is referred to as downlink control information (DCI). Formats 0, 3, 3A and 4 for uplink and formats 1, 1A, 1B, 1C, ID, 2, 2A, 2B and 2C for downlink are defined as DCI formats. Information field type, the number of information fields, the number of bits of each information field, etc. depend on DIC format. For example, the DCI formats selectively include information such as hopping flag, RB assignment, MCS (Modulation Coding Scheme), RV (Redundancy Version), NDI (New Data Indicator), TPC (Transmit Power Control), HARQ process number, PMI (Precoding Matrix Indicator) confirmation as necessary. Accordingly, the size of control information matched to a DCI format depends on the DCI format. A arbitrary DCI format may be used to transmit two or more types of control information. For example, DIC formats 0/1A is used to carry DCI format 0 or DIC format 1, which are discriminated from each other using a flag field.

A PDCCH may carry a transport format and a resource allocation of a downlink shared channel (DL-SCH), resource allocation information of an uplink shared channel (UL-SCH), paging information on a paging channel (PCH), system information on the DL-SCH, information on resource allocation of an upper-layer control message such as a random access response transmitted on the PDSCH, a set of Tx power control commands on individual UEs within an arbitrary UE group, a Tx power control command, information on activation of a voice over IP (VoIP), etc. A plurality of PDCCHs can be transmitted within a control region. The UE can monitor the plurality of PDCCHs. The PDCCH is transmitted on an aggregation of one or several consecutive control channel elements (CCEs). The CCE is a logical allocation unit used to provide the PDCCH with a coding rate based on a state of a radio channel. The CCE corresponds to a plurality of resource element groups (REGs). A format of the PDCCH and the number of bits of the available PDCCH are determined by the number of CCEs. The BS determines a PDCCH format according to DCI to be transmitted to the UE, and attaches a cyclic redundancy check (CRC) to control information. The CRC is masked with a unique identifier (referred to as a radio network temporary identifier (RNTI)) according to an owner or usage of the PDCCH. If the PDCCH is for a specific UE, a unique identifier (e.g., cell-RNTI (C-RNTI)) of the UE may be masked to the CRC. Alternatively, if the PDCCH is for a paging message, a paging identifier (e.g., paging-RNTI (P-RNTI)) may be masked to the CRC. If the PDCCH is for system information (more specifically, a system information block (SIB)), a system information RNTI (SI-RNTI) may be masked to the CRC. When the PDCCH is for a random access response, a random access-RNTI (RA-RNTI) may be masked to the CRC.

The PDCCH carries a message known as DCI which includes resource assignment information and other control information for a UE or UE group. In general, a plurality of PDCCHs can be transmitted in a subframe. Each PDCCH is transmitted using one or more CCEs. Each CCE corresponds to 9 sets of 4 REs. The 4 REs are referred to as an REG. 4 QPSK symbols are mapped to one REG. REs allocated to a reference signal are not included in an REG, and thus the total number of REGs in OFDM symbols depends on presence or absence of a cell-specific reference signal. The concept of REG (i.e. group based mapping, each group including 4 REs) is used for other downlink control channels (PCFICH and PHICH). That is, REG is used as a basic resource unit of a control region. 4 PDCCH formats are supported as shown in Table 2.

[Table 2]

| PDCCH format | Number of CCEs (n) | Number of REGs | Number of PDCCH bits |
|---|---|---|---|
| 0 | 1 | 9 | 72 |
| 1 | 2 | 8 | 144 |
| 2 | 4 | 36 | 288 |
| 3 | 5 | 72 | 576 |

CCEs are sequentially numbered. To simplify a decoding process, transmission of a PDCCH having a format including n CCEs can be started using as many CCEs as a multiple of n. The number of CCEs used to transmit a specific PDCCH is determined by a BS according to channel condition. For example, if a PDCCH is for a UE having a high-quality downlink channel (e.g. a channel close to the BS), only one CCE can be used for PDCCH transmission. However, for a UE having a poor channel (e.g. a channel close to a cell edge), 8 CCEs can be used for PDCCH transmission in order to obtain sufficient robustness. In addition, a power level of the PDCCH can be controlled according to channel condition.

LTE defines CCE positions in a limited set in which PDCCHs can be positioned for each UE. CCE positions in a limited set that the UE needs to monitor in order to detect the PDCCH allocated thereto may be referred to as a search space (SS). In LTE, the SS has a size depending on PDCCH format. A UE-specific search space (USS) and a common search space (CSS) are separately defined. The USS is set per UE and the range of the CSS is signaled to all UEs. The USS and the CSS may overlap for a given UE. In the case of a considerably small SS with respect to a specific UE, when some CCEs positions are allocated in the SS, remaining CCEs are not present. Accordingly, the BS may not find CCE resources on which PDCCHs will be transmitted to available UEs within given subframes. To minimize the possibility that this blocking continues to the next subframe, a UE-specific hopping sequence is applied to the starting point of the USS.

Table 3 shows sizes of the CSS and USS.

[Table 3]

| PDCCH format | Number of CCEs (n) | Number of candidates in common search space | Number of candidates in dedicated search space |
|---|---|---|---|
| 0 | 1 | - | 6 |
| 1 | 2 | - | 6 |
| 2 | 4 | 4 | 2 |
| 3 | 8 | 2 | 2 |

To control computational load of blind decoding based on the number of blind decoding processes to an appropriate level, the UE is not required to simultaneously search for all defined DCI formats. In general, the UE searches for formats 0 and 1A at all times in the USS. Formats 0 and 1A have the same size and are discriminated from each other by a flag in a message. The UE may need to receive an additional format (e.g. format 1, 1B or 2 according to PDSCH transmission mode set by a BS). The UE searches for formats 1A and 1C in the CSS. Furthermore, the UE may be set to search for format 3 or 3A. Formats 3 and 3A have the same size as that of formats 0 and 1A and may be discriminated from each other by scrambling CRC with different (common) identifiers rather than a UE-specific identifier. PDSCH transmission schemes and information content of DCI formats according to transmission mode (TM) are arranged below.

Transmission mode (TM)

- Transmission mode 1: Transmission from a single base station antenna port
- Transmission mode 2: Transmit diversity
- Transmission mode 3: Open-loop spatial multiplexing
- Transmission mode 4: Closed-loop spatial multiplexing
- Transmission mode 5: Multi-user MIMO (Multiple Input Multiple Output)
- Transmission mode 6: Closed-loop rank-1 precoding
- Transmission mode 7: Single-antenna port (port5) transmission
- Transmission mode 8: Double layer transmission (ports 7 and 8) or single-antenna port (port 7 or 8) transmission
- Transmission mode 9: Transmission through up to 8 layers (ports 7 to 14) or single-antenna port (port 7 or 8) transmission

DCI format

- Format 0: Resource grants for PUSCH transmission
- Format 1: Resource assignments for single codeword PDSCH transmission (transmission modes 1, 2 and 7)
- Format 1A: Compact signaling of resource assignments for single codeword PDSCH (all modes)
- Format 1B: Compact resource assignments for PDSCH using rank-1 closed loop precoding (mod 6)
- Format 1C: Very compact resource assignments for PDSCH (e.g. paging/broadcast system information)
- Format 1D: Compact resource assignments for PDSCH using multi-user MIMO (mode 5)
- Format 2: Resource assignments for PDSCH for closed-loop MIMO operation (mode 4)
- Format 2A: Resource assignments for PDSCH for open-loop MIMO operation (mode 3)
- Format 3/3A: Power control commands for PUCCH and PUSCH with 2-bit/1-bit power adjustments

FIG. 5 illustrates an EPDCCH. The EPDCCH is a channel additionally introduced in LTE-A.

Referring to FIG. 5, a PDCCH (for convenience, legacy PDCCH or L-PDCCH) according to legacy LTE may be allocated to a control region (see FIG. 4) of a subframe. In the figure, the L-PDCCH region means a region to which a legacy PDCCH may be allocated. Meanwhile, a PDCCH may be further allocated to the data region (e.g., a resource region for a PDSCH). A PDCCH allocated to the data region is referred to as an E-PDCCH. As shown, control channel resources may be further acquired via the E-PDCCH to mitigate a scheduling restriction due to restricted control channel resources of the L-PDCCH region. Similarly to the L-PDCCH, the E-PDCCH carries DCI. For example, the E-PDCCH may carry downlink scheduling information and uplink scheduling information. For example, the UE may receive the E-PDCCH and receive data/control information via a PDSCH corresponding to the E-PDCCH. In addition, the UE may receive the E-PDCCH and transmit data/control information via a PUSCH corresponding to the E-PDCCH. The E-PDCCH/PDSCH may be allocated starting from a first OFDM symbol of the subframe, according to cell type. In this specification, the PDCCH includes both L-PDCCH and EPDCCH unless otherwise noted.

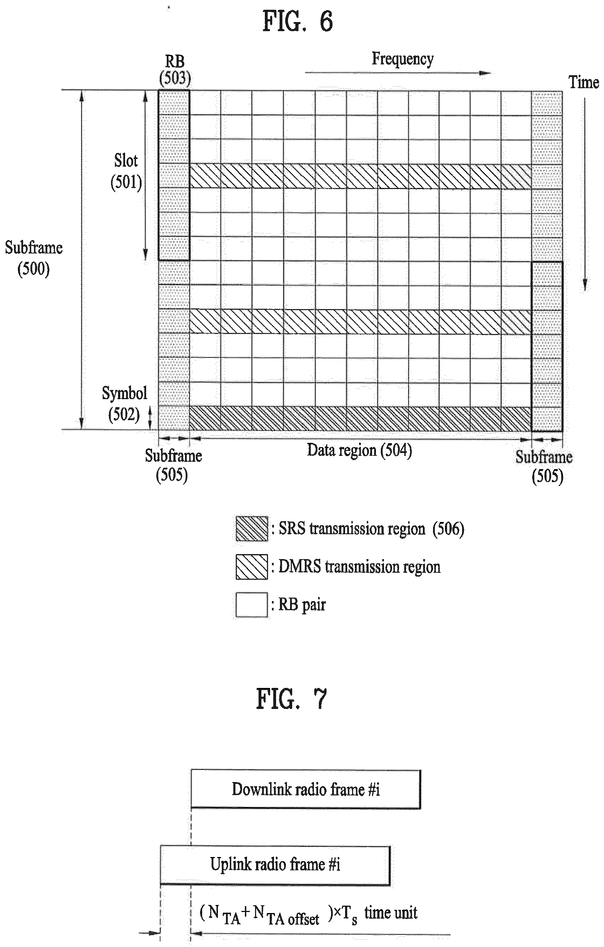

FIG. 6 illustrates a structure of an uplink subframe used in LTE(-A).

Referring to FIG. 6, a subframe 500 is composed of two 0.5 ms slots 501. Assuming a length of a normal cyclic prefix (CP), each slot is composed of 7 symbols 502 and one symbol corresponds to one SC-FDMA symbol. A resource block (RB) 503 is a resource allocation unit corresponding to 12 subcarriers in the frequency domain and one slot in the time domain. The structure of the uplink subframe of LTE(-A) is largely divided into a data region 504 and a control region 505. A data region refers to a communication resource used for transmission of data such as voice, a packet, etc. transmitted to each UE and includes a physical uplink shared channel (PUSCH). A control region refers to a communication resource for transmission of an uplink control signal, for example, downlink channel quality report from each UE, reception ACK/NACK for a downlink signal, uplink scheduling request, etc. and includes a physical uplink control channel (PUCCH). A sounding reference signal (SRS) is transmitted through an SC-FDMA symbol that is lastly positioned in the time axis in one subframe. SRSs of a plurality of UEs, which are transmitted to the last SC-FDMAs of the same subframe, can be differentiated according to frequency positions/sequences. The SRS is used to transmit an uplink channel state to an eNB and is periodically transmitted according to a subframe period/offset set by a higher layer (e.g., RRC layer) or aperiodically transmitted at the request of the eNB.

FIG. 7 illustrates uplink-downlink frame timing relation.

Referring to FIG. 7, transmission of the uplink radio frame number *i* starts prior to $(N_{TA}+N_{TAoffset})*T_s$ seconds from the start of the corresponding downlink radio frame. In case of the LTE system, $0 \leq N_{TA} \leq 20512$, $N_{TAoffset}=0$ in FDD, and $N_{TAoffset}=624$ in TDD. The value $N_{Taoffset}$ is a value in advance recognized by the BS and the UE. If $N_{TA}$ is indicated through a timing advance command during a random access procedure, the UE adjusts transmission timing of UL signal (e.g., PUCCH/PUSCH/SRS) through the above equation. UL transmission timing is set to multiples of $16T_s$. The timing advance command indicates the change of the UL timing based on the current UL timing. The timing advance command $T_A$ within the random access response is a 11-bit timing advance command, and indicates values of 0, 1, 2, ..., 1282 and a timing adjustment value is given by $N_{TA}=T_A*16$. In other cases, the timing advance command $T_A$ is a 6-bit timing advance command, and indicates values of 0, 1, 2,..., 63 and a timing adjustment value is given by $N_{TA,new}=N_{TA,old}+(T_A-31)*16$. The timing advance command received at subframe n is applied from the beginning of subframe n+6. In case of FDD, as shown, transmitting timing of UL subframe n is advanced based on the start time of the DL subframe n. On the contrary, in case of TDD, transmitting timing of UL subframe n is advanced based on the end time of the DL subframe n+1 (not shown).

Next, HARQ (Hybrid Automatic Repeat reQuest) will be described. When a plurality of UEs has data to be transmitted on uplink/downlink in a wireless communication, an eNB selects UEs which will transmit data per transmission time internal (TTI) (e.g., subframe). In a system using multiple carriers and the like, an eNB selects UEs which will transmit data on uplink/downlink per TTI and also selects a frequency band to be used for data transmission of the corresponding UEs.

When description is based on uplink (UL), UEs transmit reference signals (or pilot signals) on uplink and an eNB detects channel states of the UEs using the reference signals transmitted from the UEs and selects UEs which will transmit data on uplink in each unit frequency band per TTI. The eNB notifies the UEs of the result of selection. That is, the eNB transmits, to UL scheduled UEs, a UL assignment message indicating that the UEs may transmit data using a specific frequency band in a specific TTI. The UL assignment message is also referred to as a UL grant. The UEs transmit data on uplink according to the UL assignment message. The UL assignment message may include UE identity (ID), RB allocation information, a modulation and coding scheme (MCS), a redundancy version (RV), new data indication (NDI) and the like.

In the case of a synchronous non-adaptive HARQ method, a retransmission time is appointed in the system (e.g., after 4 subframes from a NACK reception time). Accordingly, the eNB may send a UL grant message to UEs only in initial transmission and subsequent retransmission is performed according to an ACK/NACK signal (e.g., PHICH signal). On the other hand, in the case of an asynchronous adaptive HARQ method, a retransmission time is not appointed and thus the eNB needs to send a retransmission request message to UEs. Further, the retransmission request message may include UE ID, RB allocation information, HARQ process ID/number, RV and NDI information because frequency resources or an MCS for retransmission vary with transmission time.

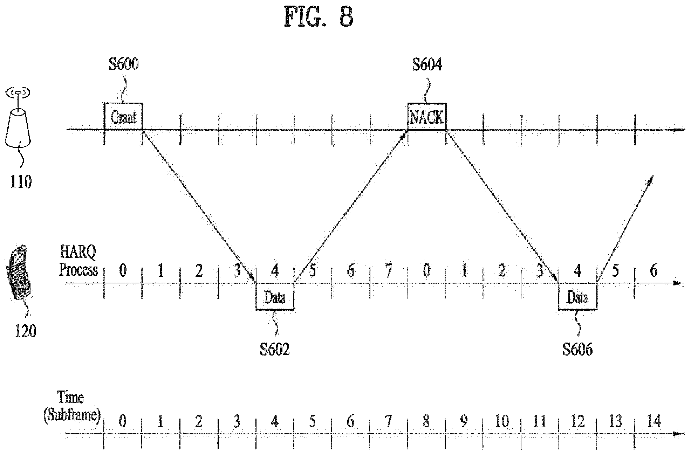

FIG. 8 illustrates a UL HARQ operation in an LTE(-A) system. In the LTE(-A) system, the asynchronous adaptive HARQ method is used as a UL HARQ method. When 8-channel HARQ is used, 0 to 7 are provided as HARQ process numbers. One HARQ process operates per TTI (e.g., subframe). Referring to FIG. 8, a UL grant is transmitted to a UE 120 through a PDCCH (S600). The UE 120 transmits UL data to an eNB 110 after 4 subframes from the time (e.g., subframe 0) at which the UL grant is received using an RB and an MCS designated by the UL grant (S602). The eNB 110 decodes the UL data received from the UE 120 and then generates ACK/NACK. When decoding of the UL data fails, the eNB 110 transmits NACK to the UE 120 (S604). The UE 120 retransmits the UL data after 4 subframes from the time at which NACK is received (S606). Initial transmission and retransmission of the UL data are performed through the same HARQ process (e.g., HARQ process 4). ACK/NACK information may be transmitted through a PHICH.

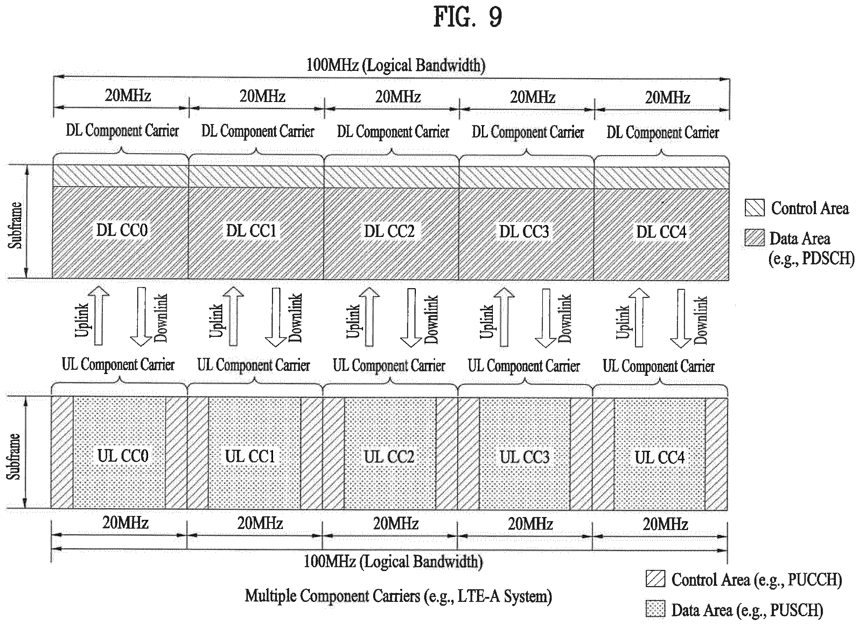

FIG. 9 illustrates carrier aggregation (CA) communication system.

Referring to FIG. 9, a plurality of UL/DL component carriers (CCs) can be aggregated to support a wider UL/DL bandwidth. The CCs may be contiguous or non-contiguous in the frequency domain. Bandwidths of the CCs can be independently determined. Asymmetrical CA in which the number of UL CCs is different from the number of DL CCs can be implemented. Control information may be transmitted/received only through a specific CC. This specific CC may be referred to as a primary CC and other CCs may be referred to as secondary CCs. For example, when cross-carrier scheduling (or cross-CC scheduling) is applied, a PDCCH for downlink allocation can be transmitted on DL CC #0 and a PDSCH corresponding thereto can be transmitted on DL CC #2. The term "component carrier" may be replaced by other equivalent terms (e.g. "carrier", "cell", etc.).

For cross-CC scheduling, a carrier indicator field (CIF) is used. Presence or absence of the CIF in a PDCCH can be determined by higher layer signaling (e.g. RRC signaling) semi-statically and UE-specifically (or UE group-specifically). The baseline of PDCCH transmission is summarized as follows.

■ CIF disabled: a PDCCH on a DL CC is used to allocate a PDSCH resource on the same DL CC or a PUSCH resource on a linked UL CC.
● No CIF
■ CIF enabled: a PDCCH on a DL CC can be used to allocate a PDSCH or PUSCH resource on a specific DL/UL CC from among a plurality of aggregated DL/UL CCs using the CIF.
● LTE DCI format extended to have CIF

- CIF corresponds to a fixed x-bit field (e.g. x=3) (when CIF is set)
- CIF position is fixed irrespective of DIC format size (when CIF is set)

When the CIF is present, the BS may allocate a monitoring DL CC (set) to reduce BD complexity of the UE. For PDSCH/PUSCH scheduling, the UE may detect/decode a PDCCH only on the corresponding DL CCs. The BS may transmit the PDCCH only through the monitoring DL CC (set). The monitoring DL CC set may be set UE-specifically, UE-group-specifically or cell-specifically.

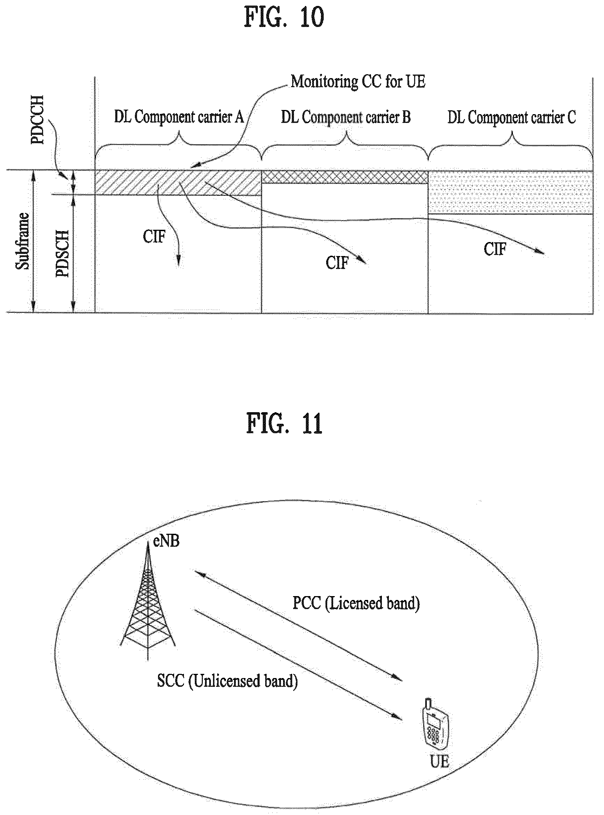

FIG. 10 illustrates scheduling when a plurality of carriers is aggregated. It is assumed that 3 DL CCs are aggregated and DL CC A is set to a PDCCH CC. DL CC A~C may be referred to as a serving CC, serving carrier, serving cell, etc. When the CIF is disabled, each DL CC can transmit only a PDCCH that schedules a PDSCH corresponding to the DL CC without a CIF according to LTE PDCCH rule (non-cross-CC scheduling). When the CIF is enabled through UE-specific (or UE-group-specific or cell-specific) higher layer signaling, a specific CC (e.g. DL CC A) can transmit not only the PDCCH that schedules the PDSCH of DL CC A but also PDCCHs that schedule PDSCHs of other DL CCs using the CIF (cross-scheduling). A PDCCH is not transmitted on DL CC B and DL CC C.

As more and more telecommunication devices require greater communication capacity, efficient utilization of limited frequency bands in future wireless communication systems is increasingly important. Basically, the frequency spectrum is divided into a licensed band and an unlicensed band. The licensed band includes frequency bands reserved for specific uses. For example, the licensed band includes government allocated frequency bands for cellular communication (e.g., LTE frequency bands). The unlicensed band is a frequency band reserved for public use and is also referred to as a license-free band. The unlicensed band may be used by anyone without permission or declaration so long as such use meets radio regulations. The unlicensed band is distributed or designated for use by anyone at a close distance, such as within a specific area or building, in an output range that does not interfere with the communication of other wireless stations, and is widely used for wireless remote control, wireless power transmission, Wi-Fi, and the like.

Cellular communication systems such as LTE systems are also exploring ways to utilize unlicensed bands (e.g., the 2.4 GHz band and the 5GHz band), used in legacy Wi-Fi systems, for traffic off-loading. Basically, since it is assumed that wireless transmission and reception is performed through contention between communication nodes, it is required that each communication node perform channel sensing (CS) before transmitting a signal and confirm that none of the other communication nodes transmit a signal. This operation is referred to as clear channel assessment (CCA), and an eNB or a UE of the LTE system may also need to perform CCA for signal transmission in an unlicensed band. For simplicity, the unlicensed band used in the LTE-A system is referred to as the LTE-U band. In addition, when an eNB or UE of the LTE system transmits a signal, other communication nodes such as Wi-Fi should also perform CCA in order not to cause interference. For example, in the 801.11ac Wi-Fi standard, the CCA threshold is specified to be -62 dBm for non-Wi-Fi signals and -82dBm for Wi-Fi signals. Accordingly, the station (STA)/access point (AP) does not perform signal transmission so as not to cause interference when a signal other than Wi-Fi signals are received at a power greater than or equal to -62 dBm. In a Wi-Fi system, the STA or AP may perform CCA and signal transmission if a signal above a CCA threshold is not detected for more than 4 μs.

FIG. 11 illustrates carrier aggregation of a licensed band and an unlicensed band. Referring to FIG. 11, an eNB may transmit a signal to a UE or the UE may transmit a signal to the eNB in a situation of carrier aggregation of the licensed band (hereinafter, LTE-A band, L-band) and the unlicensed band (hereinafter, LTE-U band, U-band). Here, the center carrier or frequency resource of the license band may be interpreted as a PCC or PCell, and the center carrier or frequency resource of the unlicensed band may be interpreted as an SCC or SCell.

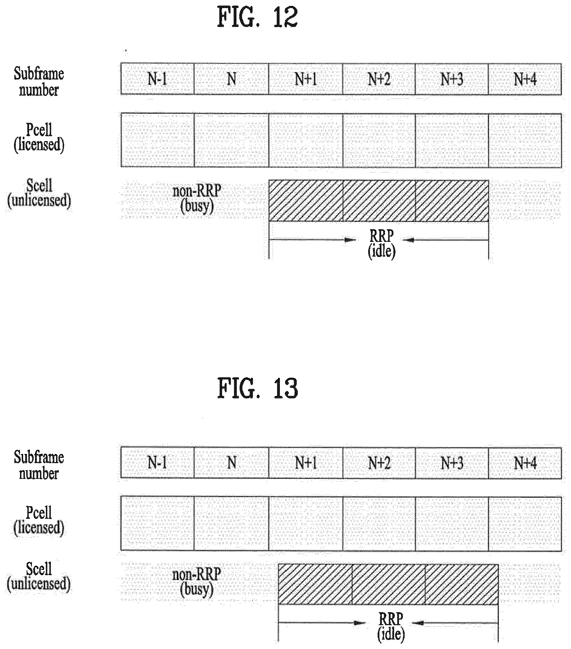

FIGs. 12 and 13 illustrate a method of occupying resources within a licensed band. In order to perform communication between an eNB and a UE in an LTE-U band, the band should be occupied/secured for a specific time period through contention with other communication systems (e.g., Wi-Fi) unrelated to LTE-A. For simplicity, the time period occupied/secured for cellular communication in the LTE-U band is referred to as a reserved resource period (RRP). There are various methods for securing the RRP interval. For example, a specific reservation signal may be transmitted such that other communication system devices such as Wi-Fi can recognize that the corresponding wireless channel is busy. For example, the eNB may continuously transmit an RS and data signal such that a signal having a specific power level or higher is continuously transmitted during the RRP interval. If the eNB has predetermined the RRP interval to occupy in the LTE-U band, the eNB may pre-inform the UE of the RRP interval to allow the UE to maintain the communication transmission/reception link during the indicated RRP interval. The RRP interval information may be transmitted to the UE through another CC (e.g., the LTE-A band) connected through carrier aggregation.

For example, an RRP interval consisting of M consecutive subframes (SF) may be configured. Alternatively, one RRP interval may be configured as a set of nonconsecutive SFs (not shown). Here, the eNB may pre-inform the UE through higher layer signaling (e.g., RRC or MAC signaling) or a physical control/data channel of the value of M and the usage of the M SFs (using PCell). The start time of the RRP interval may be set periodically by higher layer signaling (e.g., RRC or MAC signaling). Alternatively, the start time of the RRP interval may be specified through physical layer signaling (e.g., (E)PDCCH) in SF #n or SF # (n-k) when the start time of the RRP interval needs to be set to SF #n. Here, k is a positive integer (e.g., 4).

The RRP may be configured such that the SF boundary and the SF number/index thereof are aligned with the PCell (FIG. 2) (hereinafter, "aligned-RRP"), or configured to support the format in which the SF boundary or the SF number/index is not aligned with the PCell (hereinafter, "floating-RRP") (FIG. 13). In the present invention, the SF boundaries being aligned between cells may mean that the interval between SF boundaries of two different cells is shorter than or equal to a specific time (e.g., CP length or X $\mu$s (X$\geq$0)). In addition, in the present invention, a PCell may refer to a cell that is referenced in order to determine the SF (and/or symbol) boundary of a UCell in terms of time (and/or frequency) synchronization.

As another example of operation in the unlicensed band performed in a contention-based random access scheme, the eNB may perform carrier sensing before data transmission/reception. If a current channel status of the SCell is determined as being an idle when the channel status is checked for whether it is busy or idle, the eNB may transmit a scheduling grant (e.g., (E)PDCCH) through the PCell (LTE-A band) or the SCell (LTE-U band), and attempt to perform data transmission/reception on the SCell. For convenience, a serving cell (e.g., PCell and SCell) operating in a licensed band is defined as LCell and a center frequency of the LCell is defined as (DL/UL) LCC. A serving cell (e.g., SCell) operating in an unlicensed band is defined as UCell and a center frequency of the UCell is defined as (DL/UL) UCC. In addition, a case in which a UCell is scheduled from the same cell and a case in which a UCell is scheduled from a different cell (e.g., PCell) are respectively referred to as self-CC scheduling and cross-CC scheduling.

### Embodiment: Signal transmission and reception in LTE LAA (Licensed Assisted Access)

In the legacy LTE system, a single-SF scheduling method through which each of DL/UL grant DCI schedules a single DL/UL data channel (e.g., PDSCH/PUSCH) transmitted through a single DL/UL SF is applied. On the other hand, LTE-A and following systems may consider application of a multi-SF scheduling method through which a single DL/UL grant DCI simultaneously schedules a plurality of DL/UL data channels transmitted through a plurality of DL/UL SFs in order to reduce DCI overhead associated with data scheduling. The necessity and advantages of the multi-SF scheduling method may stand out with respect to system operation (e.g., UL scheduling) in unlicensed band (i.e., U-band). This is briefly arranged as follows.

1) In the case of self-CC scheduling for a UCell, it may be advantageous to schedule a plurality of UL SFs when a DL radio channel has been acquired once (by an eNB for the UCell on the basis of CCA) for flexible duplexing operation and DL/UL resource configuration.

2) A single UE may advantageously occupy a plurality of UL SFs when a UL radio channel has been acquired once (by the UE for the UCell on the basis of CCA). That is, it may be advantageous to schedule a plurality of consecutive SFs for a single UE using a single UL grant DCI.

3) If only the single-SF scheduling method is assumed, the number of UEs which transmit PUSCHs after successful CCA may be less than the number of UL grant DCIs transmitted by the eNB, and thus DCI overhead may need to be reduced for the UCell.

4) It may be advantageous to apply the multi-SF scheduling method in order to use all UCell resources as UL SFs when the UCell is cross-CC scheduled form a TDD LCell.

Meanwhile, a UCell has characteristics that DL/UL SFs are configured aperiodically/opportunistically according to CCA results of eNB/UEs, distinguished from the conventional LCell in which DL/US SFs are consecutively or periodically configured. Accordingly, an asynchronous HARQ method which performs only UL grant based adaptive retransmission, instead of a synchronous HARQ method which supports PHICH based non-adaptive automatic retransmission, may be applied to UCell UL. In the synchronous HARQ method, a specific (periodic) UL SF set constitutes a single UL HARQ process and an RV (Redundancy Version) is also determined according to SF number (having a predefined pattern) without additional signaling. On the contrary, in the asynchronous HARQ method, UL HARQ process IDs and RV may be directly signaled through UL grant DCI as in conventional LCell DL.

Hereinafter, a multi-SF scheduling method for reducing scheduling (UL grant) DCI overhead associated with UL data transmission on a UCell is proposed. Specifically, the present invention suggests a content configuration in UL grant DCI for multi-SF scheduling and a method of transmitting/operating the corresponding DCI and considers additional inclusion of HARQ ID and RV in UL grant DCI applied to the conventional LCell UL in consideration of asynchronous HARQ operation. The present invention may be similarly applied to asynchronous HARQ based DL/UL data scheduling and synchronous HARQ based UL data scheduling for an arbitrary cell (including LCell/UCell without discrimination of operation band) as well as asynchronous HARQ based UL data scheduling for UCell. In addition, the present invention may be applied to an LTE-U system (or LTE LAA system) which opportunistically operates in unlicensed band on the basis of carrier sensing. The present invention may consider CA between a PCell operating in a licensed band (i.e., L-band) and an SCell operating in an unlicensed band (i.e., U-band).

Table 4 shows an example of UL grant DCI (e.g., DCI format 0) applied to the conventional LCell UL

[Table 4]

|  | Information field | Bit(s) |
|---|---|---|
| (1) | Flag for discriminating between format 0/format 1A | 1 |
| (2) | Hopping flag | 1 |
| (3) | Resource block allocation and hopping resource allocation | $\left\lceil \log_2(N_{RB}^{UL}(N_{RB}^{UL}+1)/2) \right\rceil$ |
| (4) | MCS and RV (Modulation and coding scheme and redundancy Version) | 5 |
| (5) | New data indicator (NDI) | 1 |
| (6) | TPC command for scheduled PUSCH | 2 |
| (7) | Cyclic shift for DMRS (Demodulation Reference Signal) | 3 |
| (8) | UL index (TDD) | 2 |
| (9) | CQI request | 1 |

The flag field is an information field for discriminating between format 0 and format 1A. That is, DCI formats 0 and 1A have the same payload size and are discriminated from each other by the flag field. The bit size of the resource block allocation and hopping resource allocation field may vary according to a hopping PUSCH or a non-hopping PUSCH. The resource block allocation and hopping resource allocation field for the non-hopping PUSCH provides $\left\lceil \log_2(N_{RB}^{UL}(N_{RB}^{UL}+1)/2) \right\rceil$ bits to resource allocation of the first slot in a UL subframe. $N_{RB}^{UL}$ is the number of resource blocks included in an uplink slot and is subordinate to a UL transmission bandwidth set in the cell. Accordingly, the payload size of DCI format 0 may vary according to UL bandwidth. DCI format 1A includes a information field for PDSCH allocation and has a payload size which varies according to DL bandwidth. DCI format 1A provides a reference information bit size with respect to DCI format 0. Accordingly, when the number of information bits of DCI format 0 is less than the number of information bits of DCI format 1A, "0" is added to DCI format 0 until the payload size of the DCI format 0 becomes equal to the payload size of DCI format 1A. Added "0s" are padded in a padding field of the DCI format.

For convenience, DCI content for UL data transmission is defined as follows.

1) RA (Resource Allocation): Resource (e.g., RB) allocation information (e.g., N bits) used for data (e.g., UL-SCH transport block) transmission

2) MCS: Modulation/coding scheme (e.g., 5 bits) used for data transmission

3) DMRS CS: CS and OCC (orthogonal cover code) information (e.g., 3 bits) for a DMRS of a UL data channel (e.g., PUSCH)

4) TPC: Power information (e.g., 2 bits) applied to a UL data channel (e.g., PUSCH)

5) CSI (Channel State Information) request: indicates whether aperiodic CSI feedback transmission is performed (e.g., 1 to 3 bits).

6) SRS request: indicates whether aperiodic SRS signal transmission is performed (e.g., 1 bit).

7) NDI: indicates whether new data is transmitted or previously received data is retransmitted (e.g., 1 bit).

8) HARQ ID: HARQ process ID/number corresponding to data transmission (e.g., 3 or 4 bits)

9) RV: Redundancy version information used for data transmission (e.g., 2 bits)

10) DAI (Downlink Assignment Index): indicates a total number of PDSCHs (or PDCCHs) scheduled through a plurality of DL SFs (bundling window) linked to a single UL SF.

In the following description, according to context, multi-SF may refer to a maximum subframe period in which multi-SF scheduling can be performed or a subframe period to which multi-SF scheduling is actually applied in a maximum subframe period in which multi-SF scheduling is performed. Multi-SF may refer to a subframe period to which multi-SF scheduling is actually applied unless otherwise mentioned. Multi-SF may be consecutive SFs.

**(1) Method 1**

For multi-SF scheduling (UL grant) DCI design, DCI content may be classified into three content types. Furthermore, information (referred to as Nsf) indicating the number/period of SFs to which scheduling according to corresponding DCI is applied may be additionally signaled in multi-SF grant DCI.

1) Content type 1: Information commonly (equally) applied to multi-SF

A. Only one value is signaled in multi-SF grant DCI and the one value is equally applied to multi-SF.
B. For example, RA (N bits), MCS (5 bits), DMRS CS (3 bits), TPC (2 bits), etc.

2) Content type 2: Information applied (once) to only one specific SF belonging to multi-SF

A. Only one value is signaled in multi-SF grant DCI and the value is applied to only one specific SF belonging to multi-SF.
B. For example, CSI request (2 bits), SRS request (1 bit), DAI (2 bits), etc.
When CSI/SRS is transmitted in only one specific SF, a UE loses the opportunity to transmit the CSI/SRS when CCA fails in the corresponding SF. Accordingly, a method of transmitting CSI/SRS in each SF of multi-SF may be considered. However, when CSI/SRS is transmitted in each SF of multi-SF, the UE performs SRS transmission operation per SF although a plurality of SRS transmissions is not necessary, and thus UL resources may be wasted. When CSI/SRS is transmitted only in a specific SF, an eNB can request CSI/SRS transmission of the UE again even though CSI/SRS fails due to CCA failure in the corresponding SF. Accordingly, it is desirable to transmit CSI/SRS only in a specific SF belonging to multi-SF.

3) Content type 3: Information individually applied to each SF belonging to multi-SF

A. Signaled as many as the number of SFs to be scheduled in multi-SF grant DCI and individually applied to respective SFs belonging to multi-SF.
B. For example, NDI (1 bit), RV (2 bits), HARQ process ID (3 bits), etc.

Meanwhile, the multi-SF grant DCI may be configured to have one size irrespective of the number/period (i.e., Nsf value) of SFs to be scheduled. That is, the multi-SF grant DCI may be configured to have the same size for all Nsf values. For example, the size of the multi-SF grant DCI may be set on the basis of a DCI content configuration when a minimum Nsf value (e.g., 1) is applied. Under such conditions, (1) the number/size of fields corresponding to content type 3 may be allocated in proportion to Nsf in the multi-SF grant DCI (i.e., the number/size of the corresponding fields increase as Nsf increases) and (2) the number/size of fields corresponding to content type 1/2 may decrease as Nsf increases or the corresponding fields may be omitted in the multi-SF grant DCI. In other words, the number/size of fields (e.g., NDI, RV and HARQ ID) corresponding to content type 3 may increase whereas the size of fields (e.g., RA, MCS, DMRS CS, TPC, CSI request, SRS request NDI, RV and HARQ ID) corresponding to content type 1/2 may decrease or may be omitted as Nsf increases (in multi-SF grant DCI having a fixed size). Based on this, the granularity (information unit size)/number of types of content type 1/2 values and presence or absence of corresponding fields may vary according to Nsf (Approach 1).

For example, a situation in which field sizes of CSI request and HARQ ID are respectively assumed to be 2 bits and 3 bits and a multi-SF grant DCI size is set to (N+19) bits when Nsf = 1 may be considered. In this case, content type 3 may be allocated NDI(1)+RV(2)+HARQ ID(3) = 6 bits. The numerals in parentheses indicate the number of bits. In this situation, content type 3 may be allocated NDI(2)+RV(4)+HARQ ID(5 = ceiling($\log_2(_8C_2)$)) = 11 bits when Nsf = 2. Here, a minimum number of bits which can represent the number of types for selecting Nsf = 2 among N=8 HARQ IDs maybe allocated to the HARQ ID field. Since the field size of content type 3 when Nsf = 2 increases by 5 bits from that when Nsf = 1, (N+8) bits obtained by subtracting 5 bits from content type 1/2 = RA(N)+MCS(5)+DMRS CS(3)+TPC(2)+CSI request(2)+SRS request(1) = (N + 13) bits Nsf = 1 may be allocated to the field size of content type 1/2 when Nsf = 2. For example, content type 1/2 fields when Nsf = 2 can be configured using RA(N-2)+MCS(5-1)+DMRS CS(3-1)+TPC(2)+CSI request(2-1)+SRS request(1) = (N + 8) bits. In this case, granularity may increase (coarse) (e.g., an RB group size increases) or the number of MCS and DMRS CS values may decrease. In the case of CSI request, the number of DL cell combinations which can be indicated as CSI feedback request targets may decrease.

Additionally, when Nsf = 4 in the same situation as the above, content type 3 may be allocated NDI(4)+RV(8)+HARQ ID(7 = ceiling(log$_2$($_8$C$_4$))) = 19 bits. Since the field size of content type 3 when Nsf = 4 increases by 13 bits from the field size when Nsf= 1, N bits obtained by subtracting 13 bits from content type 1/2 field size, (N+13) bits, when Nsf = 1 may be allocated to the content type 1/2 field size when Nsf = 4. For example, content type 1/2 fields when Nsf = 2 may be configured using RA(N-6)+MCS(5-2)+DMRS CS(3-2)+TPC(2)+CSI request(2-2)+SRS request(1-1) = N bits. In this case, granularity of RA may increase (more than in a case where Nsf = 2) or the number of MCS and DMRS CS values may decrease (more than in a case where Nsf = 2). In addition, in the case of CSI request and SRS request, the fields are omitted and thus aperiodic CSI/SRS transmission request may not be allowed through multi-SF grant DCI with Nsf = 4.

Alternatively, the same DCI size may be equally set for all Nsf values in such a manner that a multi-SF grant DCI size is set on the basis of a DCI content configuration when a maximum Nsf value (Nsf_max) (e.g., 4 or 8) is applied and, when other Nsf values (smaller than the maximum value) are applied, parts of the multi-SF grant DCI which are left after DCI content is configured are padded with a specific bit (e.g., 0) (Approach 2). That is, a DCI size is set on the basis of Nsf_max and, when other Nsf values (smaller than Nsf_max) are applied, only information corresponding to Nsf values in the DCI is used. Considering a case in which multi-SF is consecutive SFs, setting a multi-SF grant DCI size on the basis of Nsf_max may cause waste of resources, but DCI content size mismatch between an eNB and a UE can be prevented by uniformly maintaining the size of each DCI content irrespective of Nsf. In addition, when a DCI content size is uniformly maintained irrespective of Nsf, granularity (information unit size)/the number of the content type 1/2 values and/or presence or absence of corresponding fields are maintained identically for available all Nsf values, and thus scheduling restrictions/inefficiency according to Nsf can be prevented. When the same situation as the above is assumed, RA(N)+MCS(5)+DMRS CS(3)+TPC(2)+CSI request(2)+SRS request(1) = (N+13) bits maybe equally allocated to content type 1/2 for all Nsf value, and content type 3 when Nsf = 4 which is the maximum value may have NDI(4)+RV(8)+HARQ ID(7 = ceiling(log$_2$($_8$C$_4$))) = 19 bits. Based on this, the multi-SF grant DCI size may be set to (N+32 = N+13+19) bits. In this situation, the field size of content type 3 when Nsf = 2 may be allocated 11 bits reduced by 8 bits from the field size when Nsf = 4, and the corresponding 8 bits in the multi-SF grant DCI may be padded with 0. That is, the DCI size is determined on the basis of the field size of content type 3 when Nsf_max is applied and, when other Nsf values (smaller than Nsf_max) are applied, content type 3 information having a size corresponding to Nsf in the DCI is used. In addition, the field size of content type 3 when Nsf = 1 may be allocated 6 bits reduced by 13 bits from the field size when Nsf = 4, and the corresponding 13 bits in the multi-SF grant DCI may be padded with 0.

As another method of Approach 2, a DCI size may be set on the basis of a maximum Nsf value and content type 3 information may be equally configured for a plurality of SFs in a state in which DCI content corresponding to the maximum Nsf value has been configured (e.g., information fields corresponding to content type 3 are individually configured for Nsf SFs and thus a total of Nsf content type 3 information fields are configured). Accordingly, it is possible to apply multi-SF scheduling corresponding to a value of Nsf smaller than the maximum value by implicitly signaling Nsf without additionally signaling Nsf in the multi-SF grant DCI. That is, a UE may determine the number/period of SFs to which multi-SF scheduling will be applied on the basis of the number of SFs for which content type 3 information is equally configured.

For example, when all or a specific part (including at least HARQ ID, for example) of content type 3 information is equally configured for N (>1) SFs, PUSCH transmission based on the content type 3 information may be performed only in a specific one (e.g., first one) of the N SFs and PUSCH transmission may be skipped in the remaining (N-1) SFs. As an additional example, when different NDI values are configured for N SFs and all or a specific part (e.g., including at least HARQ ID) of the content type 3 information other than the NDI is configured as the same values for the N SFs, PUSCH transmission based on the content type 3 information may be performed only in specific one (e.g., first one) of the N SFs and PUSCH transmission may be skipped in the remaining (N-1) SFs.

In another example, when MCS is set/configured as content type 3, PUSCH transmission may be skipped in SFs corresponding to a specific MCS value or a combination of a specific MCS value and a specific RV value. As an additional example, when both MCS and RA are set/configured as content type 3, PUSCH transmission may be skipped in SFs corresponding to a combination of a specific MCS value and a specific RA (e.g., a specific number of RB(G)s and/or a specific RB(G) index) or a combination of a specific MCS value and a specific RV value.

Alternatively, a multi-SF grant DCI size may be set on the basis of a DCI content configuration when a specific Nsf value is applied, Approach 1 may be applied when the value of Nsf is greater than the specific Nsf value and Approach 2 may be applied when the value of Nsf is smaller than the specific Nsf value (Approach 3). Alternatively, in a state in which multi-SF grant DCIs (having different sizes) have been configured for respective Nsf values without DCI reduction (through Approach 1) or bit padding (through Approach 2), different (E)PDCCH search spaces (SSs) for blind decoding (BD) of the multi-SF grant DCI may be allocated for the Nsf values. In this case, a UE may determine an Nsf value linked/set to an SS resource/region in which multi-SF grant DCI is detected as the number/period of SFs to which multi-SF scheduling will be applied without additional DCI signaling with respect to Nsf values. Alternatively, in a state in which all Nsf values have been divided into a plurality of sets and Approach 1/2/3 have been applied per set of Nsf values to configure multi-SF DCIs (having different sizes), different SSs for BD of the multi-SF grant DCI may be allocated for sets of Nsf values. For example, when conventional single-SF grant DCI corresponding to Nsf = 1 and multi-SF grant DCI (having a different size from the single-SF grant DCI) corresponding to Nsf>1 (to which Approach 1/2/3 have been applied) are configured, different SSs for BD of the single-SF grant DCI and the multi-SF grant DCI may be allocated.

Additionally, to support TDM between PUSCH transmissions of different UEs and TDM between PUSCH transmissions (based on different RBs, MCSs and/or transport block sizes (TBSs)) of a single UE, information about (i) the first SF to which multi-SF scheduling will be applied or (ii) the first SF belonging to multi-SF to be scheduled (i.e., the first SF to which scheduling will be applied in multi-SF) may be signaled through the multi-SF grant DCI (hereinafter, (i) and (ii) are collectively called first-SF). Alternatively, in a state in which multi-SF grant DCI has been configured for each of previously designated first-SFs (without additional DCI signaling with respect to first-SFs), different SSs for BD of the multi-SF grant DCI may be allocated for respective first-SFs. That is, a UE may determine a first-SF linked/set to an SS resource/region in which DCI is detected as the first SF of multi-SF to which scheduling based on the DCI will be applied. In addition, a plurality of multi-SF DCIs corresponding to different first-SFs may be configured to be simultaneously transmitted/detected through a single DL SF.

When RA is considered as content type 3, the RA field (size) in DCI may be configured/allocated such that the RA field includes resource allocation information about a BW which is obtained by extending the system bandwidth (BW) by Nsf. For example, when the system BW is N RBs and Nsf = K, the RA field (size) including resource allocation information about an extended BW corresponding to a total of K*N RBs may be configured/allocated in the multi-SF grant DCI. As a specific example, resources allocated to an RB section from a ((k-1)*N+1)-th RB to a (k*N)-th RB in the RA field may be determined as PUSCH resources allocated to a k-th SF in the scheduled multi-SF. In this manner, the RA field size can be reduced compared to a case in which K RA fields (sizes) including resource allocation information about a BW corresponding to N RBs are configured/allocated. In addition, when MCS is considered as content type 3, the field (size) in DCI may be configured/allocated in such a manner that the MCS index of the original granularity is allocated only to the first-SF (in the entire multi-SF) and an index offset is applied to MCS information allocated to the first-SF with respect to the remaining SFs. For example, when the original MCS is composed of N bits and Nsf = K, the MCS field (size) may be configured/allocated in multi-SF grant DCI in such a manner that an N-bit MCS index is allocated only to the first-SF and an L-bit index offset (L<N) is allocated to the (K-1) remaining SFs. The MCS index applied to the (K-1) remaining SFs may be obtained by applying the L-bit index offset (L<N) to the N-bit MCS index.

Alternatively, a method of performing only scheduling with respect to transmission of new data (instead of retransmission of previously received data) through the multi-SF scheduling method may be considered. Retransmission may be performed through the conventional single-SF scheduling method. In this case, NDI may be individually configured/indicated per SF in the multi-SF grant DCI, whereas field configuration (signaling according thereto) of RV may be omitted. Accordingly, a previously configured specific RV value (e.g., initial value 0) may be applied in the case of multi-SF grant DCI based scheduling. In addition, it may be possible to indicate/apply a single DCI value to the entire multi-SF by considering NDI as content type 1.

### (2) Method 2

Method 1 proposes a method of configuring multi-SF grant DCI having a single size in consideration of variation in the number/period of SFs to be scheduled and may support multi-SF scheduling for different numbers/periods of SFs (i.e., Nsf). However, this may be inefficient with respect to scheduling accuracy/overhead due to DCI granularity variation and bit padding according to Nsf. Accordingly, a partial DCI transmission based multi-SF scheduling method capable of improving scheduling accuracy/overhead without increasing BD of DCI is proposed.

In the method, multi-SF grant DCI for multi-SF scheduling is composed of two partial DCIs. Channel coding is individually performed on each of partial DCIs, and the partial DCIs may be transmitted through different control channel resources (e.g., (E)CCEs). Specifically, the first partial DCI (referred to as partial DCI-1 hereinafter) may include Nsf information, content type 1/2, and content type 3 with respect to a single first-SF and the second partial DCI (referred to as partial DCI-2 hereinafter) may include content type 3 with respect to the remaining SFs other than the first-SF (in multi-SF). Payloads of the two partial DCIs may be set to different sizes. For example, partial DCI-1 has a fixed payload size, whereas partial DCI-2 may have a payload size varying according to Nsf.

A CRC may be individually generated/added for each partial DCI. For example, C-RNTI based scrambling/masking is applied to the CRC of partial DCI-1, whereas additional scrambling/masking may not be applied to the CRC of partial DCI-2. In this case, the CRCs of the two partial DCI may be set to different lengths (e.g., the CRC of partial DCI-2 is shorter than the CRC of partial DCI-1). In addition, information about transmission resources of partial DCI-2 may be determined through partial DCI-1 detection. For example, information about resources through which partial DCI-2 is transmitted may be directly signaled through partial DCI-1 or determined in such a manner that a specific offset is added to transmission resources of partial DCI-1. When the transmission resources are composed of a plurality of resource units, information about the transmission resources of partial DCI-2 may be determined in such a manner that an offset is added to an index of a specific (e.g. first) resource unit among the plurality of resource units constituting the transmission resources of partial DCI-1.

According to this method, a UE may first attempt to detect partial DCI-1 through BD and attempt to detect/decode partial DCI-2 on the basis of information (e.g., Nsf) included in partial DCI-1 and/or resources used for transmission of partial DCI-1 (by determining a payload size and transmission resources of partial DCI-2). When both partial DCI-1 and partial DCI-2 corresponding thereto have been detected, the UE may combine information of partial DCI-1/2 and apply it to multi-SF. When only partial DCI-1 has been detected and detection of partial DCI-2 has failed, the UE may 1) apply partial DCI-1 only to the first-SF or 2) operate to ignore partial DCI-1. When Nsf = 1, transmission/detection of partial DCI-2 may be omitted and the UE may operate to apply partial DCI-1 to the first-SF.

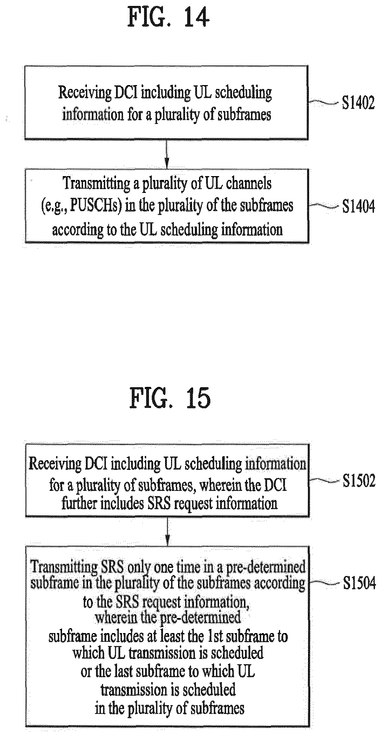

FIG. 14 illustrates a UL transmission process according to the present invention.

Referring to FIG. 14, a UE may receive DCI (i.e., multi-SF grant DCI) including UL scheduling information about a plurality of subframes from an eNB (S1402). The multi-SF grant DCI may be configured on the basis of Method 1 or 2. Then, the UE may transmit a plurality of UL channels (e.g., PUSCHs) in the plurality of subframes according to the UL scheduling information. Here, the plurality of subframes may refer to a maximum subframe period in which multi-SF scheduling can be performed or a subframe period in which multi-SF scheduling is actually applied within a maximum subframe period in which multi-SF scheduling is performed. Information (e.g., Nsf) indicating the number/period of the plurality of subframes may be included in the multi-SF grant DCI. The multi-SF grant DCI may include UL scheduling information about a plurality of subframes in a UCell. Further, the multi-SF grant DCI may be received on a UCell or an LCell (e.g., PCell). In addition, a wireless communication system may include an LTE LAA-based wireless communication system.

**(3) Other issues**

When multi-SF scheduling based on Method 1/2 or other methods is applied, it is necessary to configure a UL SF time (e.g., a transmission time of a PUSCH including aperiodic CSI feedback, or a transmission time of an aperiodic SRS signal) corresponding to a CSI request and an SRS request (which may correspond to content type 2) in the multi-SF grant DCI. The UL SF time corresponding to a CSI request and/or an SRS request in the multi-SF grant DCI may be set to 1) a first-SF (i.e., the first SF in which UL transmission is scheduled), 2) the last SF (to which multi-SF scheduling is applied) in the multi-SF (e.g., the last SF in which UL transmission is scheduled) or 3) an SF in which CCA has been initially successfully performed. In the case of 3), SRS transmission time varies according to CCA result and thus a possibility that SRS transmission and PUSCH transmission collide may increase. When an eNB intends to configure DL SF transmission immediately after completion of UL SF transmission in multi-SF, CCA of the eNB may fail due to SRS transmission and thus 2) may be more desirable than 1).

FIG. 15 illustrates an SRS transmission process according to the present invention.

Referring to FIG. 15, a UE may receive DCI (i.e., multi-SF grant DCI) including UL scheduling information about a plurality of subframes from an eNB (S1502). The multi-SF grant DCI may further include SRS request information. The multi-SF grant DCI may be configured on the basis of Method 1 or 2. Subsequently, the UE may transmit an SRS only once through a predetermined subframe within the plurality of subframes according to indication of the SRS request information (S1504). Here, the predetermined subframe may include the first subframe or the last subframe in which UL transmission is scheduled within the plurality of subframes. Here, the plurality of subframes may refer to a maximum subframe period in which multi-SF scheduling can be performed or a subframe period to which multi-SF scheduling is actually applied in the maximum subframe period in which multi-SF scheduling is performed. Information (i.e., Nsf) indicating the number/period of the plurality of subframes may be included in the multi-SF grant DCI. The UE may perform multiple UL transmissions (e.g., PUSCH transmissions) in a plurality of subframes on the basis of the UL scheduling information in the multi-SF grant DCI. In addition, the multi-SF grant DCI may include UL scheduling information about a plurality of subframe in a UCell and the SRS may be transmitted on the UCell. Further, the multi-SF grant DCI may be received on a UCell or an LCell (e.g., PCell). A wireless communication system may include an LTE LAA-based wireless communication system.

A UL SF time to which a DAI value (which may correspond to content type 2) in the multi-SF grant DCI is applied (at which the size of a HARQ-ACK payload transmitted through a PUSCH is determined on the basis of the DAI value) may be set to 1) only a first-SF or 2) only an SF in which HARQ-ACK transmission is initially performed in the multi-SF. The size of a HARQ-ACK payload transmitted through a PUSCH in the remaining UL SFs in the multi-SF may be determined as a maximum size (e.g., a total number of DL SFs within a bundling window linked to the corresponding UL SF). Alternatively, to reduce DCI overhead, a DAI field configuration in the multi-SF grant DCI and DAI signaling through the DAI field configuration may be omitted. Accordingly, the size of a HARQ-ACK payload transmitted through a PUSCH in all UL SFs scheduled through the multi-SF grant DCI can be determined as a maximum size all the time.

With respect to TPC included in the multi-SF grant DCI, 1) the TPC may be applied to the first-SF only once when accumulation is enabled and 2) the TPC may be applied to all SFs belonging to scheduled multi-SF each time when accumulation is disabled according to whether accumulation is set (for a received TPC command).

**(4) UCell scheduling**

When UL PUSCH scheduling (UL grant DCI transmission therefor) for a UCell operating on the basis of CCA is performed in consideration of the situation of self-CC scheduling performed in the UCell, an eNB may need to configure/secure a DL duration for only UL grant DCI transmission (on the basis of CCA) in spite of the situation in which PDSCH scheduling is not actually required. However, it may be difficult to configure flexible and efficient DL/UL resource durations (e.g., SFs) on the UCell, causing system performance deterioration.

Considering such problems, a method of setting a cell in which DL scheduling (DL grant transmission therefor) for a single UCell is performed (i.e., DL scheduling cell) to one cell as in the conventional systems and setting a cell in which UL scheduling (UL grant transmission therefor) is performed (i.e., UL scheduling cell) to a plurality of cells may be conceived. Accordingly, a UE may operate to perform DL grant DCI detection, for UCell DL scheduling, only on a single DL scheduling cell at one time and to simultaneously perform UL grant DCI detections, for UCell UL scheduling, on a plurality of UL scheduling cells at one time. For example, two UL scheduling cells may be set for one UCell. In this case, the two UL scheduling cells may be set to 1) the corresponding UCell which is a scheduling target and an LCell or 2) two different LCells.

Based on the aforementioned setting, a method of indicating, to a UE, a cell in which UL grant DCI detection for a UCell (scheduling target) will be performed among a plurality of UL scheduling cells through specific signaling (e.g., a UE-common PDCCH) transmitted on the corresponding UCell (or PCell) may be considered as another method for UL grant DCI detection. In this case, the UE can operate to perform UL grant DCI detection for the corresponding UCell only on the UL scheduling cell indicated through the specific signaling. When the UE fails in detection of the specific signaling, the UE may operate 1) to perform UL grant DCI detection on a most recently indicated UL scheduling cell or 2) to perform UL grant DCI detection on a (predetermined) specific LCell among a plurality of UL scheduling cells.

Additionally, (contrary to the above-described method) a method of setting a single UL scheduling cell and multiple (e.g., 2) DL scheduling cells for a single UCell may be conceived. When two DL scheduling cells are considered, the DL scheduling cells may be set to the corresponding UCell and a single LCell or 2) two different LCells. Meanwhile, the DL/UL scheduling cell setting methods of the present invention are not limited to scheduling with respect to UCells and are generally applied to scheduling with respect to any cell including an LCell.

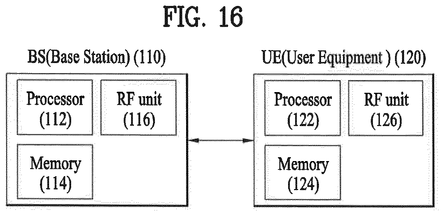

FIG. 16 illustrates a BS and a UE of a wireless communication system, which are applicable to embodiments of the present invention.

Referring to FIG. 16, the wireless communication system includes a BS 110 and a UE 120. When the wireless communication system includes a relay, the BS or UE may be replaced by the relay.

The BS 110 includes a processor 112, a memory 114 and a radio frequency (RF) unit 116. The processor 112 may be configured to implement the procedures and/or methods proposed by the present invention. The memory 114 is connected to the processor 112 and stores information related to operations of the processor 112. The RF unit 116 is connected to the processor 112 and transmits and/or receives an RF signal. The UE 120 includes a processor 122, a memory 124 and an RF unit 126. The processor 122 may be configured to implement the procedures and/or methods proposed by the present invention. The memory 124 is connected to the processor 122 and stores information related to operations of the processor 122. The RF unit 126 is connected to the processor 122 and transmits and/or receives an RF signal.

The embodiments of the present invention described hereinbelow are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment. It will be obvious to those skilled in the art that claims that are not explicitly cited in each other in the appended claims may be presented in combination as an embodiment of the present invention or included as a new claim by a subsequent amendment after the application is filed.

In the embodiments of the present invention, a description is made centering on a data transmission and reception relationship among a BS, a relay, and an MS. In some cases, a specific operation described as performed by the BS may be performed by an upper node of the BS. Namely, it is apparent that, in a network comprised of a plurality of network nodes including a BS, various operations performed for communication with an MS may be performed by the BS, or network nodes other than the BS. The term 'BS' may be replaced with the term 'fixed station', 'Node B', 'enhanced Node B (eNode B or eNB)', 'access point', etc. The term 'UE' may be replaced with the term 'Mobile Station (MS)', 'Mobile Subscriber Station (MSS)', 'mobile terminal', etc.

The embodiments of the present invention may be achieved by various means, for example, hardware, firmware, software, or a combination thereof. In a hardware configuration, the methods according to the embodiments of the present invention may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present invention may be implemented in the form of a module, a procedure, a function, etc. For example, software code may be stored in a memory unit and executed by a processor. The memory unit is located at the interior or exterior of the processor and may transmit and receive data to and from the processor via various known means.

Those skilled in the art will appreciate that the present invention may be carried out in other specific ways than those set forth herein without departing from the spirit and essential characteristics of the present invention. The above embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein.

[Industrial Applicability]

The present invention may be applicable to UEs, eNBs or other apparatuses.

**Claims**

1. A method of performing communication by a UE in a wireless communication system, comprising:

    receiving downlink control information (DCI) including UL scheduling information about a plurality of subframes, the DCI further including sounding reference signal (SRS) request information; and
    transmitting an SRS through a predetermined subframe among the plurality of subframe only one time according to indication of the SRS request information,
    wherein the predetermined subframe includes the first subframe or the last subframe in which UL transmission is scheduled among the plurality of subframes.

2. The method according to claim 1, further comprising performing multiple UL transmissions in the plurality of subframes on the basis of the UL scheduling information.

3. The method according to claim 1, wherein the UL transmissions include a physical uplink shared channel (PUSCH).

4. The method according to claim 1, wherein the DCI includes UL scheduling information about a plurality of subframes on an unlicensed cell (UCell) operating in a unlicensed band, and the SRS is transmitted on the UCell.

5. The method according to claim 3, wherein the DCI is received on the UCell or a licensed cell (LCell) operating in a licensed band.

6. The method according to claim 1, wherein the DCI further includes information indicating the number of subframes in which UL transmission is scheduled among the plurality of subframes.

7. The method according to claim 1, wherein the wireless communication system includes a wireless communication system based on Long Term Evolution (LTE) License Assisted Access (LAA).

8. A UE used in a wireless communication system, comprising:

    a radio frequency (RF) module; and
    a processor,
    wherein the processor is configured to receive downlink control information (DCI) including UL scheduling information about a plurality of subframes, the DCI further including sounding reference signal (SRS) request information and to transmit an SRS through a predetermined subframe among the plurality of subframe only one time according to indication of the SRS request information,
wherein the predetermined subframe includes the first subframe or the last subframe in which UL transmission is scheduled among the plurality of subframes.

9. The UE according to claim 8, wherein the processor is further configured to perform multiple UL transmissions in the plurality of subframes on the basis of the UL scheduling information.

10. The UE according to claim 8, wherein the UL transmissions include a physical uplink shared channel (PUSCH).

11. The UE according to claim 8, wherein the DCI includes UL scheduling information about a plurality of subframes on an unlicensed cell (UCell) operating in a unlicensed band, and the SRS is transmitted on the UCell.

12. The UE according to claim 11, wherein the DCI is received on the UCell or a licensed cell (LCell) operating in a licensed band.

13. The UE according to claim 8, wherein the DCI further includes information indicating the number of subframes in which UL transmission is scheduled among the plurality of subframes.

14. The UE according to claim 8, wherein the wireless communication system includes a wireless communication system based on Long Term Evolution (LTE) License Assisted Access (LAA).

15. A method of performing communication by a UE in a wireless communication system, comprising:

receiving downlink control information (DCI) including UL scheduling information about a plurality of subframes, the DCI further including information indicating the number Nsf of subframes in which UL transmission is scheduled; and
performing Nsf UL transmissions in the plurality of subframes on the basis of the UL scheduling information, wherein the size of the DCI is defined to correspond to a maximum number Nsf_max of subframes in which UL transmission can be scheduled, and Nsf is less than Nsf_max.

16. The method according to claim 15, wherein the size of the DCI is defined on the basis of Nsf_max new data indicator (NDI) bits, and only Nsf NDI bits corresponding to subframes in which UL transmission is scheduled are used in the DCI.

17. The method according to claim 15, wherein the DCI includes first information commonly applied to Nsf subframes, second information applied only to one of the Nsf subframes, and third information individually applied to each subframe belonging to the Nsf subframes, and
wherein the first information includes Resource Allocation (RA) information, Modulation and Coding Scheme (MCS) information, Demodulation Reference Signal Cyclic Shift (DMRS CS) information and Transmit Power Control (TPC) information, the second information includes Channel State Information (CSI) request information and Sounding Reference Signal (SRS) information, and the third information includes New Data Indicator (NDI) information, Redundancy Version (RV) information and Hybrid ARQ (HARQ) process number information.

18. A UE in a wireless communication system, comprising:

an RF module; and
a processor,
wherein the processor is configured to receive downlink control information (DCI) including UL scheduling information about a plurality of subframes, the DCI indicating the number Nsf of subframes in which UL transmission is scheduled and to perform Nsf UL transmissions in the plurality of subframes on the basis of the UL scheduling information,
wherein the size of the DCI is defined to correspond to a maximum number Nsf_max of subframes in which UL transmission can be scheduled, and Nsf is less than Nsf_max.

19. The UE according to claim 18, wherein the size of the DCI is defined on the basis of Nsf_max new data indicator (NDI) bits, and only Nsf NDI bits corresponding to subframes in which UL transmission is scheduled are used in the DCI.

**20.** The UE according to claim 18, wherein the DCI includes first information commonly applied to Nsf subframes, second information applied only to one of the Nsf subframes, and third information individually applied to each subframe belonging to the Nsf subframes, and
wherein the first information includes Resource Allocation (RA) information, Modulation and Coding Scheme (MCS) information, Demodulation Reference Signal Cyclic Shift (DMRS CS) information and Transmit Power Control (TPC) information, the second information includes Channel State Information (CSI) request information and Sounding Reference Signal (SRS) information, and the third information includes New Data Indicator (NDI) information, Redundancy Version (RV) information and Hybrid ARQ (HARQ) process number information.

# FIG. 1

Initial Cell Search — S101: P/S - SCH & [DLRS] & PBCH

System Information Reception — S102: PDCCH/PDSCH (BCCH)

Random Access Procedure — S103: PRACH, S104: PDCCH/PDSCH, S105: PRACH, S106: PDCCH/PDSCH

General DL/UL Tx/Rx — S107: PDCCH/PDSCH, S108: PUSCH/PUCCH

- DL/UL ACK/NACK
- UE CQI/PMI/Rank Report using PUSCH/PUCCH

# FIG. 2

Radio frame

| Slot | | | | | |
|------|------|------|------|------|------|
| # 0 | # 1 | # 2 | · · · | # 18 | # 19 |

Sub-frame

( a )

One radio frame, $T_s = 307200T = 10ms$

One half-frame, $T_s = 153600T = 5ms$

One slot,
$T_{slot} = 15360T_s$

$30720T_s$

| Subframe#0 | | | | Subframe#2 | Subframe#3 | Subframe#4 | Subframe#5 | | | | Subframe#7 | Subframe#8 | Subframe#9 |

One subframe,
$30720T_s$

DwPTS    GP    UpPTS

DwPTS    GP    UpPTS

( b )

# FIG. 3

Slot

7 symbols

Resource Block
12×7 Resource Elements

Resource Element

N$_{RB}$ × 12 Subcarriers

12 Subcarriers

## FIG. 4

Control Area          Data Area

1st Slot          2nd Slot

Frequency

Subframe

Time

## FIG. 5

time

L-PDCCH region

PDSCH

E-PDCCH

E-PDCCH

subframe

# FIG. 6

: SRS transmission region (506)

: DMRS transmission region

: RB pair

# FIG. 7

# FIG. 8

# FIG. 9

100MHz (Logical Bandwidth)

| 20MHz | 20MHz | 20MHz | 20MHz | 20MHz |

DL Component Carrier | DL Component Carrier | DL Component Carrier | DL Component Carrier | DL Component Carrier

Subframe

DL CC0 | DL CC1 | DL CC2 | DL CC3 | DL CC4

◻ Control Area

▨ Data Area (e.g., PDSCH)

Uplink Downlink | Uplink Downlink | Uplink Downlink | Uplink Downlink | Uplink Downlink

UL Component Carrier | UL Component Carrier | UL Component Carrier | UL Component Carrier | UL Component Carrier

Subframe

UL CC0 | UL CC1 | UL CC2 | UL CC3 | UL CC4

| 20MHz | 20MHz | 20MHz | 20MHz | 20MHz |

100MHz (Logical Bandwidth)

Multiple Component Carriers (e.g., LTE-A System)

▨ Control Area (e.g., PUCCH)

▦ Data Area (e.g., PUSCH)

# FIG. 10

# FIG. 11

# FIG. 12

| Subframe number | N-1 | N | N+1 | N+2 | N+3 | N+4 |

Pcell (licensed)

Scell (unlicensed): non-RRP (busy) | RRP (idle)

# FIG. 13

| Subframe number | N-1 | N | N+1 | N+2 | N+3 | N+4 |

Pcell (licensed)

Scell (unlicensed): non-RRP (busy) | RRP (idle)

# FIG. 14

```
┌─────────────────────────────────────┐
│   Receiving DCI including UL scheduling │ ─── S1402
│   information for a plurality of subframes │
└─────────────────────────────────────┘
                    │
                    ▼
┌─────────────────────────────────────┐
│   Transmitting a plurality of UL channels │
│   (e.g., PUSCHs) in the plurality of the subframes │ ─── S1404
│   according to the UL scheduling information │
└─────────────────────────────────────┘
```

# FIG. 15

```
┌─────────────────────────────────────┐
│ Receiving DCI including UL scheduling information │
│ for a plurality of subframes, wherein the DCI   │ ─── S1502
│ further includes SRS request information         │
└─────────────────────────────────────┘
                    │
                    ▼
┌─────────────────────────────────────┐
│ Transmitting SRS only one time in a pre-determined │
│ subframe in the plurality of the subframes according │ ─── S1504
│ to the SRS request information,                     │
│ wherein the pre-determined                          │
│ subframe includes at least the 1st subframe to      │
│ which UL transmission is scheduled                  │
│ or the last subframe to which UL                    │
│ transmission is scheduled                           │
│ in the plurality of subframes                       │
└─────────────────────────────────────┘
```

# FIG. 16

BS(Base Station) (110)

| Processor (112) | RF unit (116) |
| Memory (114) | |

UE(User Equipment ) (120)

| Processor (122) | RF unit (126) |
| Memory (124) | |